# EUROPEAN PATENT SPECIFICATION

(11) **EP 3 882 152 B1**
(45) Date of publication and mention of the grant of the patent: **11.11.2026**
(21) Application number: 21160949.0
(22) Date of filing: 05.03.2021
(51) Int. Cl.: B64D 13/06

(54) **ELECTRO-PNEUMATIC POWERED ENVIRONMENTAL CONTROL SYSTEM**
ELEKTRO-PNEUMATISCH ANGETRIEBENES KLIMAREGELUNGSSYSTEM
SYSTÈME DE COMMANDE ENVIRONNEMENTAL ÉLECTROPNEUMATIQUE

(30) Priority: 17.03.2020 US 202062990645 P
(43) Date of publication of application: 22.09.2021
(73) Proprietor: Hamilton Sundstrand Corporation, Charlotte, NC 28217-4578 (US)
(72) Inventor: ARMY, Donald E., Enfield, CT 06082 (US); HO, Tony, Glastonbury, CT 06033 (US)
(74) Representative: Dehns

(56) References cited:
- EP-A1- 3 176 089
- EP-A1- 3 323 728
- WO-A2-2009/007094
- US-A- 4 523 517
- US-A- 5 442 905
- US-A1- 2008 139 099
- US-A1- 2018 065 752
- US-A1- 2018 194 481

## Description

### BACKGROUND

Embodiments of the disclosure relate to environmental control systems, and more specifically to an environmental control system of an aircraft.

Aircraft need to have their internal environment controlled. In general, contemporary air conditioning systems are supplied a pressure at cruise that is approximately 206.8 to 241.3 KPa (30 psig to 35 psig). The trend in the aerospace industry today is towards smaller systems with higher efficiency. One approach to improve efficiency of an aircraft environmental control system is to eliminate the bleed air entirely and use electrical power to compress outside air to the minimum pressure required for the Environmental Control System (ECS) thus minimizing energy lost to valves regulating engine bleed air. A second approach is to use lower engine pressure and then boost it to the minimum required by the ECS. The third approach is to use the energy in the cabin outflow air to compress outside air and bring it into the cabin and thus use less engine bleed air. Each of these approaches alone provides limited efficiency with respect to engine fuel burn. US 2008/139099 relates to a compressor arrangement. US 2018/065752 relates to an air conditioning system for an aircraft. EP 3 323 728 relates to an air supply system.

### BRIEF DESCRIPTION

According to a first aspect of the invention, an environmental control system is defined in claim 1 and has an environmental control system pack including an inlet, a compression device including a compressor, a pneumatically driven energy source and an electrically driven energy source. The compressor is connected to the inlet so as to receive a medium from the inlet. The environmental control system comprises a ram air circuit including a ram air shell having at least one heat exchanger positioned therein and a dehumidification system is arranged in fluid communication with the ram air circuit. A medium supply system includes a manifold connected to the inlet of the environmental control system pack, wherein the manifold is arranged in fluid communication with a first medium source, a second medium source, and a third medium source, at least two of a first medium, a second medium, and a third medium are provided to the inlet of the environmental control system pack via the manifold such that a mixture of mediums is provided from the manifold to the inlet of the environmental control system pack and the compressor, wherein the second medium provided to the manifold is an ambient air having a pressure generally equal to an ambient pressure outside of the vehicle.

Preferred embodiments of the environmental control system are defined in the dependent claims 2-7.

According to a second aspect of the invention, a method of operating an environmental control system is defined in claim 8 with a preferred embodiment being defined in dependent claim 9.

Additional features and advantages are realized through the techniques of the embodiments herein. For a better understanding of the embodiments with the advantages and the features, refer to the description and to the drawings.

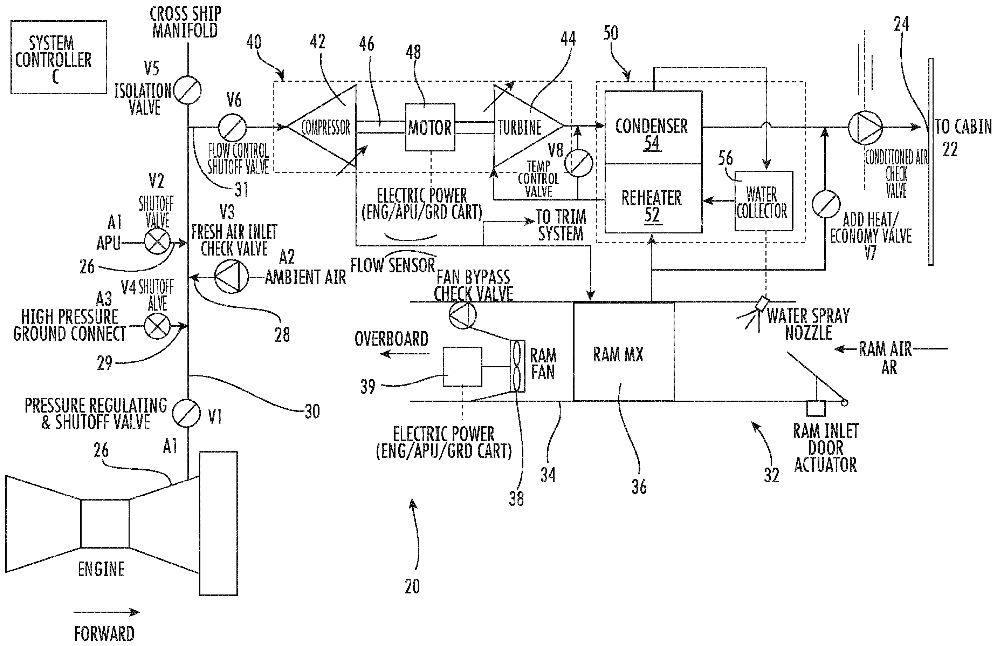

### BRIEF DESCRIPTION OF THE DRAWING

The following descriptions should not be considered limiting in any way. With reference to the accompanying figure, like elements are numbered alike:

The Figure is a simplified schematic diagram of a system according to an embodiment.

### DETAILED DESCRIPTION

A detailed description of one or more embodiments of the disclosed apparatus and method are presented herein by way of exemplification and not limitation with reference to the Figure.

An environmental control system of an aircraft mixes mediums from different sources and uses energy from one or more of the different sources to power the environmental control system and to provide cabin pressurization and cooling at a high fuel burn efficiency. The mediums described herein are generally types of air; however, it should be understood that other mediums, such as gases, liquids, fluidized solids, or slurries are also contemplated herein.

With reference now to the Figure, a schematic diagram of a portion of an environment control system (ECS) 20, such as a pack for example, is depicted according to non-limiting embodiments. Although the environmental control system 20 is described with reference to an aircraft, alternative applications are also within the scope of the disclosure. As shown in the Figure, the system 20 can receive one or more mediums and provide a conditioned form of the one or more mediums to one or more loads 22 via an outlet 24. In embodiments where the environmental control system 20 is used in an aircraft application, a first medium A1 that may be provided to the ECS 20 via at least one first port 26 is bleed air, which is pressurized air originating from i.e. being "bled" from a first medium source, such as an engine or auxiliary power unit (APU) of the aircraft. As is known, an auxiliary power unit may be any type of device used to provide energy for any function of the aircraft besides propulsion. It shall be understood that one or more of the temperature, humidity, and pressure of the bleed air can vary based upon the compressor stage and revolutions per minute of the engine or auxiliary power unit from which the air is drawn.

In addition, a second medium A2 may be provided to the ECS 20 from a second medium source via a second port 28. The second medium A2 is fresh air, such as outside air for example. The outside air can be procured via one or more scooping mechanisms, such as an impact scoop or a flush scoop for example. Generally, the fresh air A2 described herein is at an ambient pressure equal to an air pressure outside of the aircraft when the aircraft is on the ground, and is between an ambient pressure and a cabin pressure when the aircraft is in flight. Further, a third medium A3 may be provided to the ECS from a third medium source when the aircraft is on the ground, such as air from a source external to the aircraft for example. In certain embodiments, a ground supply or cart can be used to supply heated or conditioned air flow to the aircraft via a third port 29. In an embodiment, each of the ports 26, 28, 29 is arranged in fluid communication with a manifold or conduit 30 operable to deliver the one or more mediums to a pack of the ECS 20, or to multiple packs of the ECS 20. In an embodiment, the plurality of ports 26, 28, 29, associated valves V1-V4, and the manifold 30, in combination, may be considered a medium supply system, similar to a bleed air system, arranged upstream from an inlet 31 of the ECS 20.

The environmental control system 20 includes a ram air circuit 32 including a shell or duct, illustrated schematically at 34, within which one or more heat exchangers are located. The shell 34 can receive and direct a medium, such as ram air AR for example, through a portion of the system 20. The one or more heat exchangers 36 arranged within the shell 34 may be referred to as ram heat exchangers and are built for efficient heat transfer from one medium to another. Within the one or more heat exchangers 36, ram air AR, such as outside air for example, acts as a heat sink to cool a medium passing there through. Examples of the type of heat exchangers that may be used, include, but are not limited to, double pipe, shell and tube, plate, plate and shell, adiabatic shell, plate fin, pillow plate, and fluid heat exchangers. As shown, a fan 38 is disposed within the ram air shell 34. The fan 38 is operable to force via push or pull methods a medium (e.g., ram air) through the shell 34 across the one or more ram heat exchangers 36. In the illustrated, non-limiting embodiment, the fan 38 is arranged downstream from the one or more ram heat exchangers 36 and is operable to pull ram air through the ram air duct shell 34 to avoid adding heat from the fan into the ram air circuit 32.

The system 20 additionally includes a compression device 40. The compression device 40 is a mechanical device that includes components for performing thermodynamic work on a medium (e.g., extracts work from or applies work to the first medium A1, the second medium A2, or the third medium A3 by raising and/or lowering pressure and by raising and/or lowering temperature). Examples of the compression device 40 include a two-wheel air cycle machine, a three-wheel air cycle machine, a four-wheel air cycle machine, etc.

As shown, the compression device 40 includes a compressor 42 and a pneumatically driven energy source, such as a turbine 44 operably coupled to each other via a shaft 46. The compressor 42 is a mechanical device that raises a pressure of a medium and can be driven by another mechanical device (e.g., a motor or a medium via a turbine). Examples of compressor types include centrifugal, diagonal or mixedflow, axial-flow, reciprocating, ionic liquid piston, rotary screw, rotary vane, scroll, diaphragm, air bubble, etc. As shown, the compressor 42 is configured to receive and pressurize the first medium. The turbine 44 is a mechanical device that expands a medium and extracts work therefrom (also referred to as extracting energy). Further, the compressor 42 may, but need not, include one or more of a compressor with high rotor backsweep, shroud bleed, and a low solidity diffuser; a variable vaned diffuser, and a mixed flow compressor. Inclusion of a variable diffuser provides peak compressor efficiency over an operating range of the compressor 42. However, it should be understood that any suitable configuration of a compressor is within the scope of the disclosure.

In an embodiment, the turbine 44 may comprise a nozzle configured to accelerate a medium supplied thereto for entry into a turbine impeller (not shown). In the compression device 40, the turbine 44 is configured to drive the compressor 42 via the shaft 46. The one or more mediums may enter the turbine 44 via a nozzle. In an embodiment, the turbine 44 has a multiple nozzle configuration that enables a varying nozzle area based on conditions surrounding the aircraft without the added complication of a variable area turbine. Alternatively, or in addition, the turbine 44 may include a plurality of nozzles, such as two nozzles for example, having varying configurations or diameters, each of which may receive a specific medium. Further, embodiments where the turbine 44 has only a single nozzle or no nozzle are also within the scope of the disclosure.

In the illustrated, non-limiting embodiment, in addition to the compressor 42 and the turbine 44, the compression device 40 additionally includes an electrically driven energy source, such as motor 48 for example, operably coupled to the compressor 42 via the shaft 46. The motor 48 may be a single speed, or alternatively, may be a variable speed motor. In such embodiments, the compressor 42 receives one or more of the first medium A1, second medium A2, and third medium A3, and using power provided from one or both of the motor 48 and turbine 44 compresses the medium. Further, the electric power used to operate the electrically driven energy source may be provided from any of a number of sources including, but not limited to an engine, an auxiliary power unit, the ground cart, or airport utilities.

The system 20 additionally includes at least one dehumidification system 50. In the illustrated, non-limiting embodiment, the dehumidification system 50 includes a reheater 52, a condenser 54, and a water extractor 56. The reheater 52 and the condenser 54 are particular types of heat exchangers. The water extractor 56 is a mechanical device that performs a process of removing water from the medium. Together, the condenser 54, the water extractor 56, and/or the reheater 52 can be combined to form a medium pressure water separator.

The elements of the system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the system 20 can be regulated to a desired value. For example, each of the inlets 26, 28, and 29, includes a respective valve V1-V4 operable to selectively deliver a medium to the manifold 30. In an embodiment, a valve V5 is arranged within the manifold 30 and is operable to selectively transmit the medium within the manifold 30 to a second pack (not shown) of the ECS 20. Further, a flow control valve V6 may be arranged directly downstream from the manifold 30 and upstream from the inlet of the compressor 42 to control a flow rate of the one or more mediums provided to components of the ECS 20. A controller, illustrated schematically at C, is operably coupled to each of the plurality of valves.

General operation of the ECS 20 is described herein. In operation, two or more mediums may be supplied to the manifold 30. Depending on the requirements of the one or more loads in fluid communication with the outlet 24 of the ECS 20, the first medium A1 may be pulled from one or more compressor stages of an engine or the first medium A1 may be drawn from on auxiliary power unit, the second medium A2 may be pulled from the atmosphere outside the aircraft, and/or the third medium A3 may be delivered from a ground connect removably coupled to the aircraft. From the manifold 30, the mixture of mediums is provided to an inlet of the compressor. Although not shown in the Figure, in an embodiment, one or more heat exchangers may be arranged upstream from the compressor 42, for example to cool the medium or mixed medium. Within the compressor 42, the mixed medium are compressed causing the temperature and the pressure of the mixed medium to increase. The heated, pressurized mixed medium output from the compressor 42 is then provided to at least one ram heat exchanger 36. As shown, the fan 38 is used to move air, such as ram air AR for example, through the ram air heat exchanger 36. In the illustrated, non-limiting embodiment, the fan 38 is a tip turbine fan driven by a motor 39. The motor 39 may be operable at a single speed, or alternatively, at variable speeds. By using an electrically driven fan 38, the fan 38 may be optimized to minimize resulting ramp noise. However, in other embodiments, the fan 38 may be part of one of the compression devices 40, such as operably coupled to the compressor 42 and turbine 44 via the shaft 46 for example.

The mixed medium output from the ram air heat exchanger 36 is typically provided to the dehumidification system 50. The mixed medium is configured to flow through the reheater 52, the condenser 54, and the water extractor 56 sequentially. The mixed medium is cooled and further cooled within the reheater 52 and the condenser 54, respectively, causing any moisture within the mixed medium to condense. Moisture is then removed within the water extractor 56 and the mixed medium is provided again to the reheater 52 Within this cold pass of the reheater 52, the mixed medium is partially heated to produce a warm, dry medium or mixed medium. From the cold pass of the reheater 52, the warm, dry mixed medium may be provided to an inlet of the turbine 44. The warm, dry mixed medium is expanded across the turbine 44 and work is extracted therefrom. The work extracted by the turbine 44 of drives the compressor 42 via the shaft 46. The cooled, reduced pressure medium or mixed medium output from the turbine 44 is then provided to the condenser 54, where the medium or mixed medium is heated prior to being delivered to one or more loads of the aircraft, such as the volume 22 for example.

However, in embodiments where valve V8 is open, all or a portion of the mixed medium output from the cold pass of the reheater 52 is configured to bypass the turbine 44. By mixing the medium output from the turbine 44 with a portion of medium that has bypassed the turbine 44, the temperature of the mixed medium provided to the cold pass of condenser 54 can be increased.

Further, in embodiments where valve V7 is open, the air output from the ram air heat exchanger 36 has a temperature and pressure sufficient to meet the demands of the one or more loads, such as the cabin for example. Accordingly, all or at least a portion of the mixed medium output from the ram air heat exchanger 36 is configured to bypass the remainder of the ECS 20, including the dehumidification system 50 and the turbine 44. In embodiments where all of the mixed medium output from the ram air heat exchanger 36 is configured to bypass the remainder of the ECS 20, the motor 48, but not the turbine 44, is configured to drive the compressor 42.

The system 20 is operable in a plurality of modes, selectable based on a flight condition of the aircraft. For example, the system 20 is operable in a first mode when the aircraft is on the ground and in a second mode when the aircraft is in flight, such as high altitude cruise, climb, and/or descent for example.

In an embodiment, the system 20 is configured to control a position of each of the plurality of valves and select one or more of the sources of medium to optimize operation of the system 20 based on a flight condition of the aircraft. The controller C may be configured to operate one or more of the valves V1-V4 to provide a flow of one or more mediums to the ECS 20, the flow having the lowest possible temperature and/or pressure suitable to meet the demands of the one or more loads when a conditioned form of the flow is output from the ECS 20. In an embodiment, the pressure of the medium provided to the ECS 20 is selected to achieve a desired pressure ratio at the compressor 42. The pressure ratio at the compressor is the pressure of the medium output from the compressor 42 relative to the pressure of the medium provided to an inlet of the compressor 42. In an embodiment, the pressure ratio about 2:1, or alternatively, about 2.5:1, 3:1, 3.5:1, 4:1, 4.5:1, and 5:1. Further, the controller C may be operable to control the speed of the turbine 44, alternatively to or in addition to the motor speed, to increase the pressure ratio at the compressor 42.

Aspects of the embodiments are described herein with reference to flowchart illustrations, schematics, and/or block diagrams of methods, apparatus, and/or systems according to embodiments. Further, the descriptions of the various embodiments have been presented for purposes of illustration, but are not intended to be exhaustive or limited to the embodiments disclosed. Many modifications and variations will be apparent to those of ordinary skill in the art within the scope of the invention as defined by the appended claims. The terminology used herein was chosen to best explain the principles of the embodiments, the practical application or technical improvement over technologies found in the marketplace, or to enable others of ordinary skill in the art to understand the embodiments disclosed herein.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

## Claims

1. An environmental control system of an aircraft comprising:
an environmental control system pack including:
an inlet (31);
a compression device (40) including a compressor (42), a pneumatically driven energy source (44), and an electrically driven energy source (48), the compressor (42) being connected to the inlet (31) so as to receive a medium from the inlet (31);
a ram air circuit (32) including a ram air shell (34) having at least one heat exchanger (36) positioned therein;
a dehumidification system (50) arranged in fluid communication with the ram air circuit (32); and
a medium supply system including a manifold (30) connected to the inlet (31) of the environmental control system pack, wherein the manifold (30) is arranged in fluid communication with a first medium source, a second medium source, and a third medium source, at least two of a first medium (A1), a second medium (A2), and a third medium (A3) are provided to the inlet of the environmental control system pack via the manifold (30) such that a mixture of mediums is provided from the manifold (30) to the inlet (31) of the environmental control system pack and the compressor (42), wherein the second medium (A2) provided to the manifold is an ambient air having a pressure generally equal to an ambient pressure outside of the aircraft.

2. The environmental control system according to claim 1, wherein the environmental control system is operable in a plurality of modes and in a first mode of the plurality of modes, the compressor (42) is driven by both the pneumatically driven energy source and the electrically driven energy source, and preferably wherein in a second mode of the plurality of modes, the compressor (42) is driven by only the electrically driven energy source.

3. The environmental control system according to claim 1 or 2, wherein the one or more of the first medium (A1), the second medium (A2), and the third medium (A3) provided to the inlet of the environmental control system pack is selected in response to the selected mode.

4. The environmental control system according to any of claims 1-3, wherein the compressor has a variable diffuser; and/or
wherein the electrically driven energy source is a variable speed motor; and/or
wherein the pneumatically driven energy source includes a turbine having a plurality of nozzle configurations.

5. The environmental control system according to any of claims 1-4, further comprising:
a plurality of valves (V1-V4) operable to control a flow from the first medium source, the second medium source and the third medium source, respectively, to the manifold;
a controller operably coupled to the plurality of valves (V1-V4), wherein the controller is operable to control the plurality of valves such that a flow of at least one of the first medium (A1), second medium (A2), and third medium (A3) at the inlet has a lowest possible temperature and/or pressure suitable to meet a demands of a load arranged in fluid communication with an outlet of the environmental control system pack.

6. The environmental control system according to claim 4, wherein a pressure ratio at the compressor (42) is at least 2:1.

7. The environmental control system according to any of claims 1-6, wherein the ram air circuit (32) includes an electrically driven fan for moving an air flow across the at least one heat exchanger; or
wherein the ram air circuit (32) includes a fan for moving an air flow across the at least one heat exchanger, wherein the fan is operably coupled to a shaft of the compression device.

8. A method of operating an environmental control system according to claim 1, the method comprising:
determining a flight condition of the aircraft;
determining a demand of one or more loads in fluid communication with the environmental control system;
identifying, via a controller, and based on the flight condition of the aircraft, a mixed medium of at least two of the first, second and third mediums having a lowest possible temperature and/or pressure suitable to meet the demand of the one or more loads;
mixing at least two of a first medium from the first medium source, a second medium from the second medium source, and a third medium from the third medium source within the manifold to form the mixed medium; and
operating at least two valves associated with the first, second and third ports fluidly connected to the manifold of the medium supply system to deliver the mixed medium from the manifold to the inlet, wherein one of the plurality of ports is operable to deliver an ambient air to the manifold of the medium supply system.

9. The method of claim 8, further comprising determining whether to drive a compressor of the environmental control system via a pneumatically driven energy source or an electrically driven energy source.

## Patentansprüche

1. Umweltkontrollsystem eines Luftfahrzeugs, umfassend:
ein Umweltkontrollsystempaket, einschließend:
einen Einlass (31);
eine Kompressionsvorrichtung (40), die einen Kompressor (42), eine pneumatisch angetriebene Energiequelle (44) und eine elektrisch angetriebene Energiequelle (48) einschließt, wobei der Kompressor (42) mit dem Einlass (31) verbunden ist, um ein Medium von dem Einlass (31) zu empfangen;
einen Stauluftkreislauf (32), der ein Stauluftgehäuse (34) einschließt, das mindestens einen darin positionierten Wärmetauscher (36) aufweist;
ein Entfeuchtungssystem (50), das in Fluidkommunikation mit dem Stauluftkreislauf (32) angeordnet ist; und
ein Mediumversorgungssystem, das einen Verteiler (30) einschließt, der mit dem Einlass (31) des Umweltkontrollsystempakets verbunden ist, wobei der Verteiler (30) in Fluidkommunikation mit einer ersten Mediumquelle, einer zweiten Mediumquelle und einer dritten Mediumquelle angeordnet ist, wobei mindestens zwei von einem ersten Medium (A1), einem zweiten Medium (A2) und einem dritten Medium (A3) über den Verteiler (30) an dem Einlass des Umweltkontrollsystempakets bereitgestellt werden, sodass eine Mischung von Medien von dem Verteiler (30) an dem Einlass (31) des Umweltkontrollsystempakets und dem Kompressor (42) bereitgestellt wird, wobei das an dem Verteiler bereitgestellte zweite Medium (A2) eine Umgebungsluft ist, die einen Druck aufweist, der im Allgemeinen gleich einem Umgebungsdruck außerhalb des Luftfahrzeugs ist.

2. Umweltkontrollsystem nach Anspruch 1, wobei das Umweltkontrollsystem in einer Vielzahl von Modi betreibbar ist und in einem ersten Modus der Vielzahl von Modi der Kompressor (42) sowohl von der pneumatisch angetriebenen Energiequelle als auch von der elektrisch angetriebenen Energiequelle angetrieben wird, und wobei vorzugsweise in einem zweiten Modus der Vielzahl von Modi der Kompressor (42) nur von der elektrisch angetriebenen Energiequelle angetrieben wird.

3. Umweltkontrollsystem nach Anspruch 1 oder 2, wobei das eine oder die mehreren von dem ersten Medium (A1), dem zweiten Medium (A2) und dem dritten Medium (A3), die an dem Einlass des Umweltkontrollsystempakets bereitgestellt werden, als Reaktion auf den ausgewählten Modus ausgewählt wird.

4. Umweltkontrollsystem nach einem der Ansprüche 1 bis 3, wobei der Kompressor einen variablen Diffusor aufweist; und/oder
wobei die elektrisch angetriebene Energiequelle ein Motor mit variabler Drehzahl ist; und/oder
wobei die pneumatisch angetriebene Energiequelle eine Turbine einschließt, die eine Vielzahl von Düsenkonfigurationen aufweist.

5. Umweltkontrollsystem nach einem der Ansprüche 1 bis 4, ferner umfassend:
eine Vielzahl von Ventilen (V1-V4), die betreibbar ist, um einen Fluss von der ersten Mediumquelle, der zweiten Mediumquelle beziehungsweise der dritten Mediumquelle zu dem Verteiler zu steuern;
ein Steuergerät, das operativ mit der Vielzahl von Ventilen (V1-V4) gekoppelt ist, wobei das Steuergerät betreibbar ist, um die Vielzahl von Ventilen so zu steuern, dass ein Fluss mindestens eines von dem ersten Medium (A1), dem zweiten Medium (A2) und dem dritten Medium (A3) an dem Einlass eine geringstmögliche Temperatur und/oder einen geringstmöglichen Druck aufweist, die geeignet sind, um einen Bedarf einer Last zu decken, die in Fluidkommunikation mit einem Auslass des Umweltkontrollsystempakets angeordnet ist.

6. Umweltkontrollsystem nach Anspruch 4, wobei ein Druckverhältnis an dem Kompressor (42) mindestens 2:1 beträgt.

7. Umweltkontrollsystem nach einem der Ansprüche 1 bis 6, wobei der Stauluftkreislauf (32) einen elektrisch angetriebenen Ventilator zum Bewegen eines Luftstroms über den mindestens einen Wärmetauscher einschließt; oder
wobei der Stauluftkreislauf (32) einen Ventilator zum Bewegen eines Luftstroms über den mindestens einen Wärmetauscher einschließt, wobei der Ventilator operativ mit einer Welle der Kompressionsvorrichtung gekoppelt ist.

8. Verfahren zum Betreiben eines Umweltkontrollsystems nach Anspruch 1, wobei das Verfahren umfasst:
Bestimmen eines Flugzustands des Luftfahrzeugs;
Bestimmen eines Bedarfs einer oder mehrerer Lasten, die in Fluidkommunikation mit dem Umweltkontrollsystem stehen;
Identifizieren, über ein Steuergerät und basierend auf dem Flugzustand des Luftfahrzeugs, eines gemischten Mediums aus mindestens zwei von dem ersten, zweiten und dritten Medium, das eine geringstmögliche Temperatur und/oder einen geringstmöglichen Druck aufweist, die geeignet sind, um den Bedarf der einen oder der mehreren Lasten zu decken;
Mischen von mindestens zwei von einem ersten Medium von der ersten Mediumquelle, einem zweiten Medium von der zweiten Mediumquelle und einem dritten Medium von der dritten Mediumquelle innerhalb des Verteilers, um das gemischte Medium zu bilden; und
Betreiben von mindestens zwei Ventilen, die dem ersten, zweiten und dritten Anschluss zugeordnet sind, die mit dem Verteiler des Mediumversorgungssystems fluidisch verbunden sind, um das gemischte Medium von dem Verteiler an den Einlass abzugeben, wobei einer der Vielzahl von Anschlüssen betreibbar ist, um eine Umgebungsluft an den Verteiler des Mediumversorgungssystems abzugeben.

9. Verfahren nach Anspruch 8, ferner umfassend Bestimmen, ob ein Kompressor des Umweltkontrollsystems über eine pneumatisch angetriebene Energiequelle oder eine elektrisch angetriebene Energiequelle angetrieben werden soll.

## Revendications

1. Système de commande environnemental d'un aéronef comprenant :
un ensemble de système de commande environnemental comportant :
une entrée (31) ;
un dispositif de compression (40) comportant un compresseur (42), une source d'énergie à entraînement pneumatique (44) et une source d'énergie à entraînement électrique (48), le compresseur (42) étant relié à l'entrée (31) de manière à recevoir un fluide provenant de l'entrée (31) ;
un circuit d'air dynamique (32) comportant une coque d'air dynamique (34) présentant au moins un échangeur de chaleur (36) positionné à l'intérieur ;
un système de déshumidification (50) agencé en communication fluidique avec le circuit d'air dynamique (32) ; et
un système d'alimentation en fluide comportant un collecteur (30) relié à l'entrée (31) du système de commande environnemental, dans lequel le collecteur (30) est agencé en communication fluidique avec une première source de fluide, une deuxième source de fluide et une troisième source de fluide, au moins deux d'un premier fluide (A1), d'un deuxième fluide (A2) et d'un troisième fluide (A3) sont fournis à l'entrée du système de commande environnemental par le collecteur (30), de sorte qu'un mélange de fluides soit fourni du collecteur (30) à l'entrée (31) du système de commande environnemental et au compresseur (42), dans lequel le deuxième fluide (A2) fourni au collecteur est de l'air ambiant présentant une pression généralement égale à la pression ambiante à l'extérieur de l'aéronef.

2. Système de commande environnemental selon la revendication 1, dans lequel le système de commande environnemental est opérationnel dans une pluralité de modes et dans un premier mode de la pluralité de modes, le compresseur (42) est entraîné à la fois par la source d'énergie à entraînement pneumatique et la source d'énergie à entraînement électrique, et de préférence, dans lequel dans un second mode de la pluralité de modes, le compresseur (42) est entraîné uniquement par la source d'énergie à entraînement électrique.

3. Système de commande environnemental selon la revendication 1 ou 2, dans lequel l'un ou plusieurs du premier fluide (A1), du deuxième fluide (A2) et du troisième fluide (A3) fournis à l'entrée du système de commande environnemental sont sélectionnés en fonction du mode sélectionné.

4. système de commande environnemental selon l'une quelconque des revendications 1 à 3, dans lequel le compresseur présente un diffuseur variable ; et/ou
dans lequel la source d'énergie à entraînement électrique est un moteur à vitesse variable ; et/ou
dans lequel la source d'énergie à entraînement pneumatique comporte une turbine présentant une pluralité de configurations de buses.

5. Système de commande environnemental selon l'une quelconque des revendications 1 à 4, comprenant en outre :
une pluralité de vannes (V1-V4) opérationnelles pour contrôler un flux provenant respectivement de la première source de fluide, de la deuxième source de fluide et de la troisième source de fluide, vers le collecteur ;
un contrôleur couplé de manière fonctionnelle à la pluralité de vannes (V1-V4), dans lequel le contrôleur est capable de commander la pluralité de vannes de sorte qu'un flux d'au moins un du premier fluide (A1), du deuxième fluide (A2) et du troisième fluide (A3) à l'entrée présente une température et/ou une pression minimales possibles adaptées pour répondre aux exigences d'une charge disposée en communication fluidique avec une sortie du système de commande environnemental.

6. Système de commande environnemental selon la revendication 4, dans lequel un rapport de pression au niveau du compresseur (42) est d'au moins 2:1.

7. Système de commande environnemental selon l'une quelconque des revendications 1 à 6, dans lequel le circuit d'air dynamique (32) comporte un ventilateur à entraînement électrique pour déplacer un flux d'air à travers au moins un échangeur de chaleur ; ou
dans lequel le circuit d'air dynamique (32) comporte un ventilateur destiné à déplacer un flux d'air à travers au moins un échangeur de chaleur, dans lequel le ventilateur est couplé de manière fonctionnelle à un arbre du dispositif de compression.

8. Procédé de fonctionnement d'un système de commande environnemental selon la revendication 1, le procédé comprenant :
la détermination d'une condition de vol de l'aéronef ;
la détermination d'une demande d'une ou plusieurs charges en communication fluidique avec le système de commande environnemental ;
l'identification, par l'intermédiaire d'un contrôleur, et en fonction de la condition de vol de l'aéronef, d'un fluide mixte d'au moins deux des premier, deuxième et troisième fluides présentant une température et/ou une pression minimales possibles pouvant convenir à la demande de la une ou plusieurs charges ;
le mélange d'au moins deux d'un premier fluide provenant de la première source de fluide, d'un deuxième fluide provenant de la deuxième source de fluide et d'un troisième fluide provenant de la troisième source de fluide au sein du collecteur pour former le milieu mixte ; et
l'actionnement d'au moins deux vannes associées aux premier, deuxième et troisième orifices reliés fluidiquement au collecteur du système d'alimentation en fluide pour acheminer le fluide mélangé du collecteur vers l'entrée, dans lequel l'un de la pluralité d'orifices est capable d'acheminer de l'air ambiant vers le collecteur du système d'alimentation en fluide.

9. Procédé selon la revendication 8, comprenant en outre la détermination de savoir s'il faut entraîner un compresseur du système de commande environnemental par une source d'énergie à entraînement pneumatique ou une source d'énergie à entraînement électrique.
